# EUROPÄISCHE PATENTSCHRIFT

(11) **EP 2 977 338 B1**
(45) Veröffentlichungstag und Bekanntmachung des Hinweises auf die Patenterteilung: **05.12.2018**
(21) Anmeldenummer: 15178503.7
(22) Anmeldetag: 27.07.2015
(51) Int. Cl.: B65G 23/08

(54) **ANTRIEBSROLLE**
DRIVE ROLLER
GALET D'ENTRAINEMENT

(30) Priorität: 25.07.2014 DE 102014110565
(43) Veröffentlichungstag der Anmeldung: 27.01.2016
(73) Patentinhaber: Montech AG, 4552 Derendingen (CH)
(72) Erfinder: LOOSLI, Stephan, 4500 Solothurn (CH)
(74) Vertreter: Patentanwälte und Rechtsanwalt Weiß, Arat & Partner mbB

(56) Entgegenhaltungen:
- EP-A1- 1 231 166
- EP-A1- 2 236 442
- WO-A1-2013/143550
- DE-B4-102008 061 979
- DE-C1- 599 143
- DE-T2-602005 003 432
- GB-A- 370 645
- US-A1- 2012 285 802

## Beschreibung

Die Erfindung betrifft eine Antriebsrolle nach dem Oberbegriff des Anspruchs 1.

### Stand der Technik

Aus dem Stand der Technik sind verschiedene Arten von Antriebsrollen bekannt und gebräuchlich.
Die EP 1 231 166 A1 beschreibt eine Antriebsrolle nach dem Oberbergriff des Anspruchs 1. Weiter wird auf die DE 599 143 hingewiesen, welche eine Förderbandantriebstrommel offenbart, welche über eine aufwändige Konstruktion verschiedener Zahnräder angetrieben wird. Ausserdem wird auf die US 2012/0285802 A1 hingewiesen, welche einen Antriebsstopfen für eine Walze offenbart, wobei der Antrieb durch zwei ineinander liegenden drehbaren Hülsen erfolgt. Daneben wird auf die DE GB 370,645 hingewiesen, welche eine Fördereinheit mit einer Antriebrolle offenbart, wobei der Antrieb in der Antriebsrolle aufgenommen ist.
Ausserdem wird auf die EP 2 236 442 A1 hingewiesen, welche die Kraft des Innenantriebs über einen Adapter auf die Walze übertragen wird. Auch wird auf die WO 2013/143550 A1 hingewiesen. Dort ist ein in der Walze angeordneter Antrieb gezeigt, welche die endseitig an der Walze angebrachten Stopfen antreiben, welche wiederum die Walze antreiben.
In diesem Zusammenhang wird auf die DE 10 2008 061 979 B4 hingewiesen, welche einen Trommelmotor mit einer im Wesentlichen rotationssymmetrischen Trommel und einem Elektromotor, der innerhalb der Trommel angeordnet ist, zeigt. Weiter ist eine Antriebsscheibe gezeigt, welche in einen Rollenkörper eingesetzt ist. Die Antriebsscheibe überträgt die Energie des Antriebs auf den Rollenkörper, sodass dieser in Rotation versetzt wird.

Ausserdem wird auf die DE 60 2005 003 432 T2 hingewiesen, welche einen mit Permanentmagneten arbeitenden Motor aufzeigt, welcher als Walzenantriebsmotor eingesetzt werden kann, wobei der Motor einen Permanentmagneten und einen Anker mit einer Mehrzahl von Ankerwicklungen ausweist und die Steuerungsvorrichtung einen Schalter hat, der ausgeführt ist, um wiederholt wenigstens eine der Wicklungen im Kreis zu schalten und die Kreisschaltung aufzuheben und die Fördereinheit ausgeführt ist um eine von außen erzwungene Rotation des Motors in Folge einer wenigstens einer der Wicklungen induzierten elektromotorischen Kraft zu erkennen.

### Aufgabe der Erfindung

Die Aufgabe der Erfindung soll unter anderem darin liegen, dass eine Antriebsrolle zur Verfügung gestellt wird, welche als Linearantrieb nutzbar ist, wobei aber grösstmögliche Energieausbeute bei kleinem Raumeinsatz ermöglicht werden soll.
Die Aufgabe der Erfindung ist es einen Walzenantrieb für ein Förderband zur Verfügung zu stellen, dessen Herstellung kostensparend ist und dabei eine grössere Effektivität aufweist bei gleicher Baugrösse.
Dabei soll eine möglichst hohe Flexibilität bezüglich der Breite der eingesetzten Walzen ermöglicht werden.

### Lösung der Aufgabe

Zur Lösung der Aufgabe führen die Merkmale nach Anspruch 1. Vorteilhafte Ausgestaltungen finden sich in den Unteransprüchen.

Eine erfindungsgemässe Antriebsrolle für ein Förderband ist für den Einsatz in Lagern, Montagen, Automatisation und Fertigungsstrassen vorgesehen. Die Förderbänder transportieren dabei Einzelteile, Halbstücke, Werkstückträger oder dergleichen von einer Station zu einer anderen Station.

Eine Antriebsrolle soll ausserdem derart ausgeführt sein, alsdass die Verrippung durchgängig oder im Wesentlichen durchgängig einstückig mit der Walzenröhre ausgebildet ist, wobei die Walzenröhre auf ihrer dem Antrieb abgeneigten Oberfläche eine form- und kraftschlüssige Kupplung aufweist.

Durchgängig oder im Wesentlichen durchgängig bedeutet hierbei, dass sich die Verrippung im Inneren der Walzenröhre von einem Ende zum anderen Ende erstreckt. Die Form der Erstreckung ist in einem bevorzugten Ausführungsbeispiel linear angeordnet, wobei die einzelnen Rippen der Verrippung hierbei im Wesentlichen parallel zueinander angeordnet sind. Andere Formen sind ebenfalls denkbar. Im Wesentlichen bedeutet hierbei, dass die Verrippung grundsätzlich Unterbrechungen aufweisen kann, wobei die Unterbrechungen aber derart kurz ausgeführt sein müssen, dass abgestimmt mit der Länge des Ritzels eine Kraftübertragung des Ritzels auf die Walzenröhre gewährleistet ist und Schlupf verhindert wird.

Die dem Antrieb abgeneigte Oberfläche der Walzenröhre beschreibt die Seite der Walzenröhre, welche bei ordnungsgemässer Verwendung nicht für die Aufnahme des Antriebs geeignet ist sondern die Ablaufoberfläche der Walzenröhre darstellt. Die form- und kraftschlüssige Kupplung soll beispielsweise eine Zahnrad-Oberfläche sein, welche mit einem Zahnriemen oder einer Kette eine Wirkverbindung eingehen kann. Wirkverbindung bedeutet, dass die form- und kraftschlüssige Kupplung die Rotationskraft der Antriebsrolle an einen Zahnriemen weitergibt. Die form- und kraftschlüssige Kupplung stellt dabei den ersten Teil einer Kraftübertragungseinheit dar. Der zweite Teil dieser Kraftübertragungseinheit kann jedes Element sein, welches eine form- und kraftschlüssige Verbindung mit dem ersten Teil eingehen kann, ohne dass hierbei nennenswerte Reibungsverluste auftreten.

Die Antriebsrolle besteht in erster Linie aus einer Walzenröhre und einem in der Walzenröhre angeordneten Antrieb. Der Antrieb weist ein Ritzel auf, welches über eine Ritzelwelle in Rotation versetzt wird. Das Ritzel überträgt die Rotationskraft über die Verrippung auf die Walzenröhre. Dies wird im Rahmen der Erfindung auch als Wirkverbindung bezeichnet. Dabei sind die Walzenröhre und die Verrippung einstückig ausgebildet. Das bedeutet, dass sie beim Herstellungsprozess aus ein und demselben Material gebildet werden. Das bevorzugte Material für die Walzenröhre ist hierbei Aluminium. Vorteilhaft bei der einstückigen Ausbildung von Verrippung und Walzenröhre ist der Umstand, dass die Verrippung nicht mehr umständlich in die Walzenröhre eingetrieben werden muss. Ein weiterer Vorteil liegt darin, dass die Verrippung bei einer einstückigen Ausbildung den Einsatz grösserer Ritzel erlaubt, wie dies beispielsweise bei getrennten Verrippungen aus dem Stand der Technik der Fall ist. Auf diese Weise kann das Ritzel bei gleicher Ausgangsdrehzahl eine grössere Antriebskraft pro Umdrehung auf den Walzenkörper abgeben, als dies bei kleineren Ritzeln der Fall ist. Ausserdem führt ein grösserer Durchmesser beim Ritzel zu einer Schonung der Anschlagsbereiche zwischen dem Ritzel und der Verrippung, da die übertragene Kraft auf eine grössere Oberfläche trifft und über den grösseren Hebel insgesamt geringer auffällt.

Das Ritzel und die Verrippung sind form- und kraftschlüssig koppelbar. Das bedeutet im Einzelnen, dass das Ritzel ohne grösseren Aufwand in die Verrippung eingeschoben werden kann. Weiter hat es zur Folge, dass bei einer Rotation des Ritzels die Verrippung mit der Walzenröhre zeitgleich in Rotation versetzt wird.

Der Antrieb weist ein Stromversorgungskabel und eine Antriebshalterung auf. Das Stromversorgungskabel dient der Versorgung des Antriebs mit elektrischer Energie. Die Antriebshalterung dient der nicht rotierenden Lagerung des Antriebs in der Walzenröhre. Dazu wird die Antriebshalterung über ein weiteres Eckelement beispielsweise in einem Langloch eines Maschinenrahmens verdrehfest fixiert. Ebenso ist es auch denkbar, dass die Antriebshalterung schlicht festgeschraubt beziehungsweise anders verdrehsicher fixiert wird. Auf diese Weise kann die abgegebene Rotationsenergie des Ritzels auf die Walzenröhre gewährleistet werden, ohne dass der Antrieb mitdreht.

Weiter ist die Antriebshalterung derart ausgeführt, dass das Stromversorgungskabel bevorzugt im Inneren zu dem Antrieb hingeführt werden kann und dadurch vor Beeinträchtigungen oder dergleichen geschützt ist.
Die Walzenröhre weist einends einen Drehstutzen und andernends eine Antriebsaufnahme für die Antriebshalterung auf. Die Antriebshalterung und der Drehstutzen sind verdrehfest in einem Maschinenrahmen befestigbar. Durch die verdrehfeste Lagerung des Drehstutzens einerseits und der Antriebshalterung andererseits wird erreicht, dass die vom Ritzel erzeugte Rotationskraft ohne nennenswerten Verlust auf die Walzenröhre übertragen wird. Dazu weist der Drehstutzen und die Antriebshalterung einen kreisrunden Bereich auf, welcher in die Walzenröhre einschiebbar ist, aber trotzdem ermöglicht, dass sich die Walzenröhre rotieren kann. Der kreisrunde Bereich kann auch ein Kugellager oder dergleichen sein.
Die Antriebsrolle weist eine Rechnersteuerung mit einer Software auf, welche über ein Panel ermöglicht, dass der Nutzer die Antriebsrolle in gewünschter Weise betreiben kann. Unabhängig von dem Panel ist auch eine Computersteuerung nach dem Stand der Technik vorsehbar. Dabei kann die Geschwindigkeit, Beschleunigung, die Kraft und beispielsweise die Zeit eingestellt werden.

Erfindungsgemäß ist die Verrippung als Verrippung auf dem Innenumfang der Walzenröhre ausgeführt. Dies hat den Vorteil, dass der Herstellungsprozess und das Einführen des Ritzels vereinfacht werden. Weiter hat es den Vorteil, dass auch Antriebe, die kürzer ausfallen ohne grössere Anpassungsprozesse in die bestehenden Walzenröhren eingebracht werden können, solange das Ritzel mit der Verrippung eine form- und kraftschlüssige Kopplung eingehen kann. Dabei ist es nicht wesentlich, dass jede Verrippung durch das Ritzel umfangen wird. Vielmehr kommt es hierbei darauf an, dass die Rotationskraft des Ritzels ohne nennenswerten Schlupf an die Verrippung und damit an die Walzenröhre übertragen werden kann.

Der Aussenumfang der Walzenröhre weist eine Förderbandaufnahme auf. Die Förderbandaufnahme soll eine Übertragung der Rotationsenergie der Walzenröhre auf das Förderband gewährleisten. Dabei kann die Förderbandaufnahme entweder aus einem auf den Aussenumfang der Walzenröhre aufgebrachten Gummielement bestehen oder aus einer Aufrauhung der Oberfläche der Walzenröhre selbst bestehen. Wichtig ist in diesem Zusammenhang lediglich das Erreichen einer Friktion bzw. Reibung zwischen der Walzenröhre und dem Förderband.

Gesondert wird Schutz begehrt für die Walzenröhre, bei der die Verrippung auf dem Innenumfang der Walzenröhre einstückig ausgebildet oder ausgeformt ist. Dabei kommt es nicht darauf an, wie sich der Herstellungsprozess im Einzelnen gestaltet, solange eine einstückige Ausbildung der Verrippung mit der Walzenröhre möglich ist.

Weiter wird gesondert Schutz begehrt für ein Verfahren zur Herstellung der Walzenröhre, wobei die Walzenröhre und die Verrippung aus einem Material einstückig gegossen, gespritzt, gepresst oder dergleichen werden.

### Figurenbeschreibung

Weitere Vorteile, Merkmale und Einzelheiten der Erfindung ergeben sich aus der nachfolgenden Beschreibung eines erfindungsgemässen Ausführungsbeispiels sowie anhand der Zeichnung; diese zeigt in
Figur 1 eine perspektivische Explosionsansicht einer erfindungsgemässen Antriebsrolle;
Figur 2 ein Seitenansicht der Antriebsrolle nach Figur 1; und
Figur 3 einen Querschnitt der Antriebsrolle nach Figur 2 entlang der Linie III - III.

### Ausführungsbeispiel

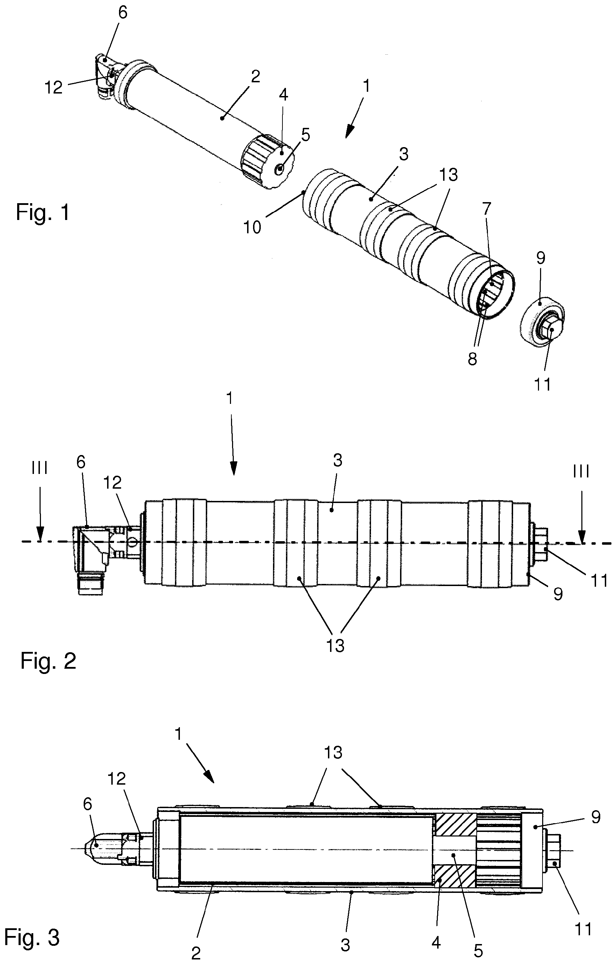

Figur 1 zeigt eine Explosionsansicht einer erfindungsgemässen Antriebsrolle 1 für ein nicht näher gezeigtes Förderband. Die Antriebsrolle 1 umfasst im Wesentlichen einen Antrieb 2 und eine Walzenröhre 3.

Der Antrieb 2 weist einends ein Ritzel 4 in Form eines Zahnrads auf. Das Ritzel 4 wird über eine Ritzelwelle 5 durch den Antrieb 2 angetrieben. Der Antrieb 2 weist andernends eine Antriebshalterung 6 sowie ein darin geführtes, nicht näher gezeigtes Stromversorgungskabel auf. Der Antrieb 2 ist in der Walzenröhre 3 gelagert. Das bedeutet, dass der Antrieb 2 bei ordnungsgemässem Einbau in dem Bereich der Walzenröhre 3 gelagert, welcher einen geringeren Umfang als die Walzenröhre 3 selbst aufweist. Daher ist ein Aussendurchmesser des Antriebs 2 geringer als ein Innendurchmesser der Walzenröhre 3.

Weiter zeigt die Walzenröhre 3 auf ihrem Innenumfang 7 eine Verrippung 8 auf, welche mit dem Ritzel 4 in Wirkverbindung bringbar ist. Die Verrippung 8 ist einstückig mit der Walzenröhre 3 ausgeformt. Weiterhin sind das Ritzel 4 und die Verrippung 8 form- und kraftschlüssig miteinander koppelbar. In den Figuren 2 und 3 ist gezeigt, wie das Ritzel 4 und die Verrippung 8 gekoppelt sind. Die Verrippung 8 ist auf der Innenseite der Walzenröhre 3 angeordnet.

Weiter ist in Figur 1 gezeigt, wie die Walzenröhre 3 einends einen Drehstutzen 9 und andernends eine Antriebsaufnahme 10 für die Antriebshalterung 6 umfasst.

Die Antriebshalterung 6 und der Drehstutzen 9 sind verdrehfest in einem nicht näher gezeigten Maschinenrahmen befestigbar. Dazu weist der Drehstutzen 9 ein aufgesetztes Eckelement 11 auf. Die Antriebshalterung 6 umfasst ein weiteres Eckelement 12.

Das Eckelement 11 und das Eckelement 12 können verdrehfest in jeweils ein nicht näher gezeigtes Langloch des Maschinenrahmens eingesetzt werden. Die Antriebsaufnahme 10 gewährleistet dabei, dass die Rotationsenergie des Ritzels 4 auf die Walzenröhre 3 übertragen werden kann, wobei die Antriebshalterung 6 und der Drehstutzen 9 währenddessen nicht mitrotieren.

Die Walzenröhre 3 weist weiterhin auf ihrem Aussenumfang, d.h. der bei einem ordnungsgemässen Einbau des Antriebs 2 in der Walzenröhre 3 die dem Antrieb 2 abgewandte Seite, eine Förderbandaufnahme 13 auf. Die Förderbandaufnahme 13 ist in dem bevorzugten Ausführungsbeispiel aus einem Gummielement, welches geeignet ist, die Rotationskraft der Walzenröhre 3 auf das nicht gezeigte Förderband zu übertragen.

In dem hier gezeigten Ausführungsbeispiel erstreckt sich die Verrippung 8 grundsätzlich durchgängig über die gesamte Länge der Walzenröhre 3. Die durchgängige Verrippung 8 endet in den Aufnahmebereichen des Drehstutzens 9 und der Antriebshalterung 6.

In einem anderen Ausführungsbeispiel kann sich die Verrippung 8 auch nur im Wesentlichen durchgängig in der Walzenröhre 3 erstrecken. Im Wesentlichen durchgängig bedeutet hierbei, dass die Verrippung 8 Unterbrechungen aufweisen kann. Dabei müssen die Unterbrechungen derart ausgebildet sein, dass die Kraftübertragung des Ritzels 4 zu jeder Zeit gewährleistet ist. Der Vorteil an der Erfindung ist gerade darin zu sehen, dass durch das Vorsehen der im Wesentlichen durchgängigen oder durchgängigen Verrippung 8 das Einfügen des Ritzels 4 in jeder Innenposition der Walzenröhre 3 möglich ist und sein soll. Dies erspart unnötige Kalibrierungshandlungen unterschiedlicher Antriebe auf unterschiedliche Walzenröhren. Im Rahmen der Erfindung ist es gerade möglich, dass aufgrund der durchgängigen oder wesentlich durchgängigen Verrippung unterschiedliche Antriebe, deren Ritzel unterschiedlich weit in die Walzenröhre 3 hineinragen in ein und dieselbe Walzenröhre 3 eingesetzt werden können. Ansonsten müsste je nach Länge des Antriebs umständlich an der notwendigen Stelle eine Verrippung vorgesehen werden.

In einem anderen Ausführungsbeispiel ist es auch denkbar, dass die Förderbandaufnahme 13 als Teil des Aussenumfangs der Walzenröhre 3 beispielsweise in Form einer Riffelung der Walzenröhre 3 selbst ausgeführt ist.

### Positionszahlenliste

- 1: Antriebsrolle
- 2: Antrieb
- 3: Walzenröhre
- 4: Ritzel
- 5: Ritzelwelle
- 6: Antriebshalterung
- 7: Innenumfang
- 8: Verrippung
- 9: Drehstutzen
- 10: Antriebsaufnahme
- 11: Eckelement
- 12: Eckelement
- 13: Förderbandaufnahme

## Patentansprüche

1. Antriebsrolle mit einem in einer Walzenröhre (3) angeordneten Antrieb (2), wobei der Antrieb (2) ein Ritzel (4) aufweist, wobei das Ritzel (4) mit einer Verrippung (8) wirkverbindbar ist, wobei die Verrippung (8) in der Walzenröhre (3) angeordnet ist, wobei die Walzenröhre auf ihrer dem Antrieb abgeneigten Oberfläche eine form- und kraftschlüssige Kupplung aufweist, wobei die Verrippung (8) auf einem Innenumfang (7) der Walzenröhre (3) ausgeführt ist, wobei die Walzenröhre (3) einends einen Drehstutzen (9) und andernends eine Antriebsaufnahme (10) für die Antriebshalterung (6) umfasst, wobei die Antriebsrolle aus der Walzenröhre und dem in der Walzenröhre angeordneten Antrieb besteht wobei der Antrieb das Ritzel, welches über eine Ritzelwelle (5) in Rotation versetzbar ist und das Ritzel die Rotationskraft über die Verrippung auf die Walzenröhre überträgt, **dadurch gekennzeichnet, dass** die Verrippung (8) durchgängig oder im Wesentlichen durchgängig einstückig mit der Walzenröhre (3) ausgebildet ist, sodass sich die Verrippung (8) im Inneren der Walzenröhre (3) von einem Ende zum anderen Ende erstreckt, und wobei die Verrippung (8) grundsätzlich Unterbrechungen aufweisen kann, wobei die Unterbrechungen aber derart kurz ausgeführt sein müssen, dass abgestimmt mit der Länge des Ritzels (4) eine Kraftübertragung des Ritzels (4) auf die Walzenröhre (3) gewährleistet ist und Schlupf verhindert wird.

2. Antriebsrolle nach Anspruch 1, **dadurch gekennzeichnet, dass** das Ritzel (4) und die Verrippung (8) form- und kraftschlüssig koppelbar sind.

3. Antriebsrolle nach Anspruch 1 oder 2, **dadurch gekennzeichnet, dass** der Antrieb (2) ein Stromversorgungskabel und eine Antriebshalterung (6) aufweist.

4. Antriebsrolle nach einem der vorigen Ansprüche, **dadurch gekennzeichnet, dass** die Antriebshalterung (6) und der Drehstutzen (9) verdrehfest in einem Maschinenrahmen befestigbar sind.

5. Antriebsrolle nach einem der vorigen Ansprüche, **gekennzeichnet durch** eine Rechnersteuerung.

6. Antriebsrolle nach einem der vorigen Ansprüche, **dadurch gekennzeichnet, dass** ein Aussenumfang der Walzenröhre (3) eine Förderbandaufnahme (13) aufweist.

## Claims

1. Drive roller comprising a drive (2) arranged in a roller tube (3), wherein the drive (2) has a pinion (4), wherein the pinion (4) is operatively connected to a ribbing (8), wherein the ribbing (8) is arranged in the roller tube (3), wherein the roller tube has a form-fitting and force-fitting coupling on the surface thereof that is inclined away from the drive, wherein the ribbing (8) is formed on an inner circumference (7) of the roller tube (3), wherein the roller tube (3) comprises at one end a rotary connection piece (9) and at the other end a drive mounting (10) for the drive holder (6), wherein the drive roller consists of the roller tube and the drive arranged in the roller tube, wherein the drive has the pinion, which can be set in rotation via a pinion shaft (5), and the pinion transmits the rotational force to the roller tube via the ribbing, **characterized in that** the ribbing (8) is formed in one piece with the roller tube (3) in a continuous or substantially continuous manner so that the ribbing (8) extends in the interior of the roller tube (3) from one end to the other end, and wherein the ribbing (8) may in principle have interruptions but the interruptions must be short so that, according to the length of the pinion (4), a force transmission from the pinion (4) to the roller tube (3) is ensured and slip is prevented.

2. Drive roller according to claim 1, **characterized in that** the pinion (4) and the ribbing (8) can be coupled in a form-fitting and force-fitting manner.

3. Drive roller according to claim 1 or 2, **characterized in that** the drive (2) has a power supply cable and a drive holder (6).

4. Drive roller according to one of the preceding claims, **characterized in that** the drive holder (6) and the rotary connection piece (9) can be non-rotatably fastened in a machine frame.

5. Drive roller according to one of the preceding claims, **characterized by** a computer control unit.

6. Drive roller according to one of the preceding claims, **characterized in that** an outer circumference of the roller tube (3) has a conveyor belt mounting (13).

## Revendications

1. Rouleau d'entraînement avec un entraînement (2) disposé dans un tube de cylindre (3), dans lequel l'entraînement (2) présente un pignon (4), dans lequel le pignon (4) peut être connecté de manière active à un nervurage (8), dans lequel le nervurage (8) est disposé dans le tube de cylindre (3),
dans lequel le tube de cylindre présente, sur la surface inclinée par rapport à l'entraînement, un couplage en liaison de forme et de force, dans lequel le nervurage (8) est réalisé sur un pourtour intérieur (7) du tube de cylindre (3), dans lequel le tube de cylindre (3) comporte, à une extrémité, un raccord rotatif (9) et, à l'autre extrémité, un moyen de réception d'entraînement (10) pour le support d'entraînement (6), dans lequel le rouleau d'entraînement est constitué du tube de cylindre et de l'entraînement disposé dans le tube de cylindre, dans lequel l'entraînement, le pignon qui peut être mis en rotation par l'intermédiaire d'un arbre de pignon (5), et le pignon transmet la force de rotation par l'intermédiaire du nervurage au tube de cylindre,
**caractérisé par le fait que** le nervurage (8) est réalisé en continu ou sensiblement en continu d'une seule pièce avec le tube de cylindre (3), de sorte que le nervurage (8) s'étende à l'intérieur du tube de cylindre (3) d'une extrémité à l'autre extrémité, et que le nervurage (8) peut présenter en principe des interruptions, où les interruptions doivent toutefois être réalisées aussi courtes qu'en coordination avec la longueur du pignon (4) soit garantie une transmission de puissance du pignon (4) au tube de cylindre (3) et qu'un glissement soit empêché.

2. Rouleau d'entraînement selon la revendication 1, **caractérisé par le fait que** le pignon (4) et le nervurage (8) peuvent être couplés en liaison de forme et de force.

3. Rouleau d'entraînement selon la revendication 1 ou 2, **caractérisé par le fait que** l'entraînement (2) présente un câble d'alimentation de courant et un support d'entraînement (6).

4. Rouleau d'entraînement selon l'une des revendications précédentes, **caractérisé par le fait que** le support d'entraînement (6) et le raccord rotatif (9) peuvent être fixés immobiles en rotation dans un bâti de machine.

5. Rouleau d'entraînement selon l'une des revendications précédentes, **caractérisé par** une commande par ordinateur.

6. Rouleau d'entraînement selon l'une des revendications précédentes, **caractérisé par le fait qu'**un pourtour extérieur du tube de cylindre (3) présente un moyen de réception de bande transporteuse (13).
